# EUROPÄISCHE PATENTANMELDUNG

(11) **EP 3 575 014 A1**
(43) Veröffentlichungstag der Anmeldung: **04.12.2019**
(21) Anmeldenummer: 18174630.6
(22) Anmeldetag: 28.05.2018
(51) Int. Cl.: B21K 25/00, B21D 39/04, B23P 11/00, F16F 9/32

(54) **ALS STOSSDÄMPFERROHR GEEIGNETES ZYLINDERROHR UND VERFAHREN ZU DESSEN HERSTELLUNG**

(71) Anmelder: Vincenz Wiederholt GmbH, 59439 Holzwickede (DE)
(72) Erfinder: Günther, Friedhelm, 44359 Dortmund (DE); Xia, Tianli, 44287 Dortmund (DE)
(74) Vertreter: Götz, Georg Alois

(57) **Zusammenfassung**

Verfahren zur Herstellung eines Zylinderrohrs (500), welches beispielsweise als Stoßdämpferrohr, insbesondere als Stoßdämpferinnenrohr für ein Zweirohrstoßdämpfer-/Federbeinsystem für Kraftfahrzeuge geeignet ist, wobei ein als Hohlrohr ausgebildeter Präzisrohrrohling (100) mit einem den Präzisrohrrohling (100) zumindest in einem Fügebereich (120) koaxial umgebenden zylindrischen und/oder ringförmigen Fügeteil (300) zur Ausbildung eines eine gegenüber dem Präzisrohrrohling (100) erhöhte Wandstärke aufweisenden Dickwandabschnitts (510) gefügt wird, wobei eine Fügeverbindung zwischen dem Präzisrohrrohling (100) und dem Fügeteil (300) zur Ausbildung des Dickwandabschnitts (510) durch lokales Kaltumformen des Fügeteils (300) innerhalb des Fügebereichs (120) form- und/oder kraftschlüssig ausgebildet wird.

## Beschreibung

Die Erfindung betrifft ein Verfahren zur Herstellung eines Zylinderrohrs d.h. eines zylindrischen Hohlrohrs, insbesondere Präzisrohrs bzw. in Präzisrohrqualität, welches beispielsweise als Stoßdämpferrohr, insbesondere als Stoßdämpferinnenrohr für ein Zweirohrstoßdämpfer-/Federbeinsystem für Kraftfahrzeuge geeignet ist wobei ein als Hohlrohr ausgebildeter Präzisrohrrohling mit einem den Präzisrohrrohling zumindest in einem Fügebereich koaxial umgebenden zylindrischen und/oder ringförmigen Fügeteil zur Ausbildung eines eine gegenüber dem Präzisrohrrohling erhöhte Wandstärke aufweisenden Dickwandabschnitts gefügt wird.

Weiterhin richtet sich die Erfindung auf ein Zylinderrohr, insbesondere nach dem vorstehenden Verfahren hergestellt, welches als Stoßdämpferrohr, insbesondere als Stoßdämpferinnenrohr für ein Zweirohrstoßdämpfer-/Federbeinsystem für Kraftfahrzeuge, geeignet ist, mit einem eine erhöhte Wandstärke aufweisenden Dickwandabschnitt.

Zweirohrstoßdämpfer-/Federbeinsysteme werden gerade in der Automobil industrie bevorzugt als Stoßdämpfer zum Dämpfen der Radschwingungen gegenüber der Karosserie eines Kraftfahrzeugs eingesetzt. Dabei sind Zweirohrstoßdämpfersysteme mit zwei konzentrisch ineinander liegenden Rohren, einem Innenrohr und einem Außenrohr ausgebildet, wobei das Innenrohr, das eigentliche Zylinderrohr, also ein zylindrisches Hohlrohr, den mit einer Stoßdämpferflüssigkeit gefüllten Kolbenraum für einen Kolben bildet. Der als Ausgleichsraum zwischen dem Innenrohr und dem Außenrohr angeordnete Ringraum ist größtenteils ebenfalls mit Stoßdämpferflüssigkeit gefüllt. Lediglich im oberen Bereich ist eine komprimierbare Gasblase vorgesehen, die dazu dient, der durch den mehr oder minder eintauchenden Kolben verdrängten Stoßdämpferflüssigkeit aufgrund ihrer Kompressibilität Raum zu bieten.

Um die hohen Anforderungen an Materialeigenschaften und Präzision einzuhalten, werden Stoßdämpferrohre im Stand der Technik zumeist aus Präzisrohrrohlingen, insbesondere gemäß DIN EN 10305-2 (November 2002) oder DIN EN 10305-3 (Februar 2003), mittels verschiedener Herstellungsverfahren hergestellt. Besonders eignen sich hierzu sogenannte axiale Kaltumformverfahren, wobei eine plastische Umformung eines metallischen Werkstoffs unterhalb dessen Rekristallisationstemperatur, welche üblicherweise bei 40-50 % der Schmelztemperatur liegt, insbesondere mittels Abstrecken, Einziehen, Stauchen und/oder Aufweiten, stattfindet.

Ein gattungsgemäßer hydraulischer Zweirohrstoßdämpfer für Kraftfahrzeuge ist aus der DE 37 219 15 A1 bekannt. Dieser weist einen Außenmantel (Außenrohr) und einen in diesem aufgenommenen Zylinder (Innenrohr) auf, dessen Innenraum als Arbeitsraum für den Kolbenhub dient. Ein zwischen dem Außenmantel und dem Zylinder abgegrenzter Raum ist mit Gas sowie Öl gefüllt und bildet einen Speicherraum bzw. Ausgleichsraum, der von dem Innenraum des Zylinders, durch ein Bodenventil getrennt ist, das an dessen unteren Ende befestigt ist. Das Bodenventil ist mit einer Drosselöffnung sowie mit einer Rücklauföffnung versehen, wobei durch die Drosselöffnung fließendes Öl bei der Einfederung (Kompressionshub) des Dämpfers eine Dämpfungskraft erzeugt. Der in den Zylinder verschiebbar eingesetzte Kolben teilt den Innenraum des Zylinders in zwei Kammern. Während einer Ausfederung (Expansionshub) des Dämpfers wird eine Dämpfungskraft erzeugt, indem zwischen den beiden Kammern Öl fließt. Um eine Gasströmung vom Speicherraum in den Innenraum des Zylinders zu vermeiden sollte ein zusätzlicher Dichtungsmechanismus vorgesehen sein.

Der EP 3 213 837 A1 ist ein Verfahren zur Herstellung eines Stoßdämpferinnenrohrs für einen hydraulischen Zweirohrstoßdämpfer zu entnehmen. Ausgehend von einem Präzisrohrrohling wird das Stoßdämpferinnenrohr in mehreren Kaltumformschritten hergestellt, wobei ein erster Rohrbereich durch Stauchen zu einem Dickwandabschnitt mit gegenüber dem Präzisrohrrohling erhöhter Wandstärke umgeformt wird und ein anderer, zweiter Rohrbereich, insbesondere ein Rohrende, mittels eines Aufweitdorns mit einer Rohraufweitung ausgebildet wird. Zur Verwendung als Stoßdämpferinnenrohr ist es vorteilhaft, den Dickwandabschnitt sowie das aufgeweitete Rohrende jeweils mit einem Rohraußendurchmesser auszubilden, der im Wesentlichen dem Rohrinnendurchmesser eines Außenrohrs für denselben Zweirohrstoßdämpfer entspricht, um beispielsweise das aufgeweitete Ende des Innenrohrs und das Außenrohr miteinander verschweißen zu können. Der Dickwandabschnitt kann als Ringsteg fungieren und mit einer Ringnut zur Aufnahme eines Dichtungsrings versehen werden, um das Innenrohr und das Außenrohr flüssigkeitsdicht, insbesondere öldicht, gegeneinander abzudichten. Zur Ausbildung des Dickwandabschnitts in einem von einem Rohrende beabstandeten Rohrbereich, ist es notwendig, zunächst von dem Rohrende ausgehend, eine spanende Materialbearbeitung vorzunehmen, um die Wandstärke zu reduzieren und hierdurch eine Stauchungskante als Kraftangriffspunkt für ein Stauchungswerkzeug auszubilden. Je weiter der Dickwandabschnitt den Rohrenden beabstandet ist, desto höher sind der Materialverlust und die damit verbundenen Kosten.

Aus dem Stand der Technik sind auch Fügeverfahren für Rohre bekannt, bei welchen zwei Einzelteile dauerhaft miteinander verbunden werden. Die EP 0 944 443 B1 offenbart beispielsweise ein Verfahren zur Herstellung von Verbundrohren, insbesondere sogenannten innenplattierten Rohren. Hierbei wird in ein äußeres, dickwandiges Rohr aus einem höherfesten metallischen Werkstoff ein zweites inneres Rohr mit einem kleineren Außendurchmesser eingeschoben. Das innere Rohr besteht aus einem ebenfalls metallischen Werkstoff und weist eine geringere Wanddicke auf als das äußere Rohr. Durch mechanisches Aufschrumpfen wird, im Sinne einer Presspassung, ein kraftschlüssiger Verbund geschaffen, indem der Durchmesser des äußeren Rohres dadurch reduziert wird, dass dieses durch einen Reduzierring hindurch gezwungen wird. Die Fügeverbindung wird hierbei über die gesamte Mantelfläche des Innenrohrs ausgebildet. Je nach Anwendungsbereich und den entsprechend auftretenden Kräften und Beanspruchungen kann es zu einer Verschiebung bzw. einem Versatz der beiden Rohre in axialer Richtung zueinander kommen.

Im Bereich Nockenwellen für Brennkraftmaschinen ist in der DE 10 2005 062 207 A1 ein Sicherungselement, welches eine radiale Verschiebung zweier koaxial zueinander angeordneter Rohre verhindern soll, vorgeschlagen. Offenbart ist eine Nockenwelle mit einer koaxial in einer Außenwelle angeordneten Innenwelle, wobei die Außenwelle als kreiszylindrisches Rohr ausgebildet ist. Die axial endseitig zur Innenwelle angeordnete Sicherungseinrichtung dient der Fixierung der Innenwelle radial zur Außenwelle. Bei einer Ausbildung der Sicherungseinrichtung als ringförmiges Sicherungselement weist die Innenwelle eine radial nach innen zurück versetzte Umfangsstufe auf, welche einen Sitz für das Sicherungselement bildet. Das Sicherungselement kann dabei mittels Schrumpfsitz auf die Innenwelle aufgeschrumpft und so fest mit dieser verbunden werden. Die Fügeverbindung wird hier zwischen dem ringförmigen Sicherungselement und der aus Vollmaterial gebildeten Innenwelle realisiert.

Schließlich betrifft die DE 199 57 508 C1 eine Vorrichtung zum Fügen von mit eine Durchgangsöffnung versehenen Fügeteilen, wie beispielsweise Nocken auf Hohlprofile, beispielsweise eine Hohlwelle zur Bildung einer Nockenwelle. Hierin wird vorgeschlagen, die Nocken durch partielle Innenhochdruckumformung mittels einer ein Druckfluid führenden Aufweitlanze vorzunehmen. Die Aufweitlanze wird hierzu in die Hohlwelle eingeschoben und weitet diese mittels fluidem Innenhochdruck an der Stelle auf, an welcher die Nocken aufgeschoben sind um eine als Pressverbund realisierte Fügung zu erwirken. Nachteilig bei dieser Methode ist, dass das Hohlprofil mittels des fluidischen Innenhochdrucks an der Fügestelle plastisch aufgeweitet wird, wodurch sich dessen Materialeigenschaften, insbesondere dessen Festigkeitswerte, verschlechtern.

Daher ist es Aufgabe der vorliegenden Erfindung ein verbessertes Zylinderrohr sowie ein Verfahren zu dessen Herstellung anzugeben.

Bei einem erfindungsgemäßen Verfahren zur Herstellung eines als Stoßdämpferrohr, insbesondere als Stoßdämpferinnenrohr für ein Zweirohrstoßdämpfer-/Federbeinsystem für Kraftfahrzeuge, geeigneten Zylinderrohrs der eingangs näher bezeichneten Art wird diese Aufgabe dadurch gelöst, dass eine Fügeverbindung zwischen dem Präzisrohrrohling und dem Fügeteil zur Ausbildung des Dickwandabschnitts durch lokales Kaltumformen des Fügeteils innerhalb des Fügebereichs form- und/oder kraftschlüssig ausgebildet wird.

Ebenso wird die vorstehende Aufgabe durch ein, insbesondere nach einem solchen Verfahren hergestellten, Zylinderrohr, welches als Stoßdämpferrohr, insbesondere als Stoßdämpferinnenrohr für ein Zweirohrstoßdämpfer-/Federbeinsystem für Kraftfahrzeuge, geeignet ist gelöst, indem der Dickwandabschnitt als Fügeverbindung zwischen einem Präzisrohrrohling und einem zylindrischen und/oder ringförmigen Fügeteil ausgebildet ist, wobei das Fügeteil den Präzisrohrrohling in einem Fügebereich und im Bereich des Dickwandabschnitts koaxial umgibt.

Die Erfindung ist nicht auf die Verwendung des erfindungsgemäßen Verfahrens zur Herstellung eines Zylinderrohrs für Stoßdämpfersysteme beschränkt. Erfindungsgemäß kommen jegliche Anwendungsmöglichkeiten in Betracht, bei welchen ein zylindrisches Hohlrohr mit einem (lokal) verdickten Wandabschnitt, einem (lokalen) Dickwandabschnitt, in Präzisrohrqualität bzw. als Präzisrohrprodukt benötigt wird. Durch die erfindungsgemäße Fügeverbindung kann im Bereich des Dickwandabschnitts ein den an ein Präzisrohrprodukt gestellten Anforderungen entsprechender Kraft- und/oder Formschluss erlangt werden.

Vorteilhafte Ausgestaltungen und zweckmäßige Weiterbildungen der Erfindung sind Gegenstand der jeweiligen Unteransprüche.

Erfindungsgemäß ist somit vorgesehen, ein zylindrisches und/oder ringförmiges Fügeteil an einen Präzisrohrrohling anzufügen, um ein Zylinderrohr mit einem Dickwandabschnitt zu erhalten. Der Dickwandabschnitt weist gegenüber den übrigen Abschnitten des Zylinderrohres bzw. gegenüber dem Präzisrohrrohling eine erhöhte Wandstärke auf. Um die hohen Anforderungen an Stoßdämpferrohre, insbesondere an deren Festigkeit, zu erfüllen und damit das Zylinderrohr zur Verwendung als Stoßdämpferrohr, insbesondere als Stoßdämpferinnenrohr, geeignet ist, wird die Fügeverbindung durch ein Kaltumformverfahren ausgebildet bzw. wird das Fügeteil lokal kalt umgeformt. Beim Kaltumformverfahren wird das, vorzugsweise metallische, Fügeteil mittels Krafteinwirkung umgeformt, d.h. die Geometrie des Fügeteils wird plastisch verändert. Anders als bei thermischen Umformverfahren oder beim thermischen Fügen wird beim Kaltumformverfahren die Rekristallisationstemperatur des Werkstoffs, welche üblicherweise bei 40-50 % der Schmelztemperatur liegt, insbesondere des metallischen Werkstoffs, nicht überschritten. Somit lässt sich eine kraft- und/oder formschlüssige Verbindung lokal im Fügebereich zwischen dem Präzisrohrrohling und dem Fügeteil erwirken, welche dann den Dickwandabschnitt eines Zylinderrohres ausbildet. Das erhaltene Zylinderrohr und dessen Dickwandabschnitt sind in derselben Art und Weise, wie ein integral hergestelltes Zylinderrohr, mit einem beispielsweise durch Stauchen umgeformten Dickwandabschnitt weiter verarbeitbar und/oder verwendbar. Der Dickwandabschnitt kann an beliebigen axialen Abschnitten des Präzisrohrrohlings, auch von dessen Endabschnitten und/oder Rohrenden beabstandet und in beliebiger axialer Länge ausgebildet werden, ohne, dass wesentliche Änderungen im Verfahrensablauf vorzunehmen sind. Gegenüber gestauchten Zylinderrohren, deren Dickwandabschnitt entweder im Endbereich angeordnet ist, oder mittels vorherigem Eindrehen einer Stauchungskante ausgebildet wird, ist das vorliegende Herstellungsverfahren flexibler und aufgrund der nicht länger notwendigen spanenden Materialbearbeitung zur Ausbildung einer Stauchungskante kostengünstiger. Insgesamt kann ein Präzisrohrrohling mit einer gegenüber den herkömmlichen Herstellungsverfahren geringeren Wandstärke verwendet werden.

Die Festlegung der Position des Dickwandabschnitts erfolgt durch Festlegung des Fügebereichs, innerhalb welchem das zylindrische und/oder ringförmige Fügeteil koaxial zum Präzisrohrrohling angeordnet ist. Die axiale Länge des Dickwandabschnitts kann durch die axiale Länge des verwendeten zylindrischen und/oder ringförmigen Fügeteils festgelegt werden. Im Sinne der Erfindung ist außerdem vorgesehen, das Kaltumformverfahren lokal auf das Fügeteil und nicht auf den Präzisrohrrohling selbst anzuwenden, wodurch Veränderungen der Materialeigenschaften, insbesondere eine Verminderung der Festigkeitswerte, und/oder Veränderungen in der Geometrie des Präzisrohrrohlings vermieden werden. Gerade für die Innenwandung eines Innenrohrs für ein Zweirohrstoßdämpfersystem ist eine glatte, insbesondere riefenfreie Oberfläche unerlässlich, um ein ungehindertes Gleiten des sich darin auf und ab bewegenden Kolbens zu realisieren.

Nach einer vorteilhaften Ausgestaltung des erfindungsgemäßen Herstellungsverfahrens wird das Fügeteil während des Kaltumformens in einem Arbeitshub in einer Hubrichtung durch einen Matrizen- und/oder Reduzierring gezwungen, wobei lokal innerhalb des Fügebereichs ein axialer und/oder ein radialer Materialversatz des Fügeteils zur Ausbildung der form- und/oder kraftschlüssigen Fügeverbindung erwirkt wird.

Gemäß einer zweckmäßigen Weiterbildung dieser Ausgestaltung wird der Präzisrohrrohling während des Kaltumformens mittels eines, insbesondere als Spannbacken ausgebildeten, Fixiermittels gehalten, wobei der Präzisrohrrohling in dem Arbeitshub lose und/oder mit Spiel mittels des Fixiermittels gehalten wird, um eine axiale Positionsverlagerung des Präzisrohrrohlings zu ermöglichen.

Hierbei ist es besonders zweckmäßig, wenn der Präzisrohrrohling nach dem Kaltumformen in einem auf den Arbeitshub folgenden Rückhub in einer der Hubrichtung entgegen gerichteten Rückhubrichtung durch den Matrizen- und/oder Reduzierring geführt wird und mittels eines, insbesondere als zwei Spannbacken ausgebildeten, Fixiermittels fest und/oder spielfrei gehalten wird, um eine axiale Positionsverlagerung des Präzisrohrrohlings einzuschränken und/oder zu verhindern.

Beispielsweise kann der Präzisrohrrohling während des Arbeitshubs mittels eines Stützdorns, welcher im Inneren des Präzisrohrrohlings angeordnet wird gestützt werden, um einer während des Kaltumformens des Fügeteils auf den Präzisrohrrohling übertragenen Kraft entgegen zur wirken und diesen zu stabilisieren. Der Fügebereich ist dann zwischen dem Matrizen- und/oder Reduzierring und dem Stützdorn angeordnet. Axial gegenüberliegend ist das Fixiermittel, welches insbesondere als einen Gegendorn umgebende Spannbacken ausgebildet ist, angeordnet. Durch das Fixiermittel wird der Präzisrohrrohling, insbesondere zwischen den Spannbacken und dem Gegendorn, lose und/oder mit Spiel gehalten um beispielsweise ein passgenaues Einführen des Stützdorns in den Präzisrohrrohling zu erleichtern. Zusätzlich bildet der Gegendorn einen Anschlag und somit eine axiale Positionsbegrenzung für den Stützdorn.

Zur Festlegung der Position des zur Ausbildung des Dickwandabschnitts vorgesehenen Fügebereichs, kann sich das zylindrische und/oder ringförmige Fügeteil an Stützkanten des Fixiermittels abstützen. Während des Arbeitshubs wird das Fügeteil durch den Matrizen- und/oder Reduzierring hindurch gezwungen, wodurch eine Kaltumformung mit einem axialen und/oder radialen Materialversatz erwirkt wird. Aufgrund des axialen Materialversatzes wird die axiale Länge des sich auf den Stützkanten des Fixiermittels abstützenden Fügeteils erhöht, wobei der form- und/oder kraftschlüssig zwischen dem Stützdorn und dem Fügeteil bzw. dem Matrizen- und/oder Reduzierring "eingeklemmte" Präzisrohrrohling innerhalb des Fixiermittels axial versetzt, insbesondere leicht angehoben wird. Um eine Beschädigung und/oder eine Qualitätsverminderung des Präzisrohrrohlings während des Kaltumformens im Arbeitshub zu vermeiden, ist es zweckmäßig, dass der Präzisrohrrohling lose und/oder mit Spiel von dem Fixiermittel gehalten wird.

Beim Rückhub hingegen ist es vorteilhaft, dass der Präzisrohrrohling fest und/oder ohne Spiel von dem Fixiermittel gehalten wird, um insbesondere ein Herausziehen des Stützdorns aus dem Inneren des Präzisrohrrohlings und/oder ein Hindurchführen des Fügeteils mit dem Präzisrohrrohling, insbesondere des Fügebereichs, durch den Matrizen- und/oder Reduzierring zu ermöglichen. Bei einem als Spannbacken ausgeführten Fixiermittel ist es beispielsweise möglich, dieses radial in Richtung des Präzisrohrrohlings weiter zu verfahren, insbesondere zu schließen und den Präzisrohrrohling durch Kraft- und/oder Formschluss zurückzuhalten.

Eine vorteilhafte Ausgestaltung des Verfahrens sieht vor, dass der Präzisrohrrohling innerhalb des Fügebereichs mit einer Ringnut oder einer umlaufenden Aufnahme ausgebildet wird und anschließend während des Kaltumformens ein radialer Materialversatz des Fügeteils in die Ringnut oder umlaufende Aufnahme zur Ausbildung der formschlüssigen Fügeverbindung erwirkt wird.

In zweckmäßiger Weiterbildung wird eine axiale Länge des zylindrischen und/oder ringförmigen Fügeteils größer gewählt, als eine axiale Länge der innerhalb des Fügebereichs am Präzisrohrrohling ausgebildeten Ringnut oder umlaufenden Aufnahme und während des Kaltumformens ein radialer Materialversatz des Fügeteils in die Ringnut oder umlaufende Aufnahme zur Ausbildung der formschlüssigen Fügeverbindung erwirkt.

Um eine formschlüssige Verbindung zwischen dem Fügeteil und dem Präzisrohrrohling auszubilden, kann dieser zunächst innerhalb des Fügebereichs mit einer Ringnut oder einer umlaufenden Aufnahme in beliebiger geometrischer Gestaltung ausgebildet werden, welche beispielsweise durch spanende Materialbearbeitung, insbesondere durch Drehen, erzeugt wird. Im Arbeitshub kann der Fügebereich mit dem Präzisrohrrohling und dem Fügeteil durch einen Matrizen- und/oder Reduzierring gezwungen werden um eine Kaltumformung zu erwirken. Aufgrund der radial zu dem Fügeteil innen liegenden Ringnut oder umlaufenden Aufnahme findet hierbei ein Materialversatz des Fügeteils in radialer Richtung in die Ringnut oder umlaufende Aufnahme hinein statt. Die Ringnut oder umlaufende Aufnahme kann also derart mit dem Fügeteil "befüllt" werden, dass eine formschlüssige Verbindung zwischen diesem und dem Präzisrohrrohling entsteht. Man spricht hier auch von "Einkneten" des Fügeteils.

In dem erfindungsgemäßen Herstellungsverfahren ist es vorteilhaft, dass das Fügeteil vor und/oder während des Kaltumformens zur Ausbildung und/oder Verbesserung der kraftschlüssigen Fügeverbindung auf eine Temperatur unterhalb der Rekristallisationstemperatur, welche üblicherweise bei 40-50 % der Schmelztemperatur liegt, des Fügeteils erwärmt wird.

Weiterhin oder optional ist es auch vorteilhaft, dass eine Materialfestigkeit des Präzisrohrrohlings höher gewählt wird, als eine Materialfestigkeit des Fügeteils. Insbesondere wird für den Präzisrohrrohling ein erster metallischer Werkstoff mit einer Festigkeit und für das Fügeteil ein anderer, zweiter metallischer Werkstoff mit einer geringeren Festigkeit gewählt.

Beispielsweise ist es denkbar, dass das Fügeteil, bevor es koaxial im Bereich der Fügestelle zu dem Präzisrohrrohling angeordnet wird, auf eine Temperatur von ca. 70°C -80°C vorgewärmt wird. Optional oder zusätzlich wird das Fügeteil auch während des Kaltumformens durch die einwirkenden Kräfte weiter erwärmt. Nach Abschluss des Kaltumformens, insbesondere nach dem Rückhub, kühlt das Fügeteil ab, wodurch, insbesondere zusätzlich, zu dem Formschluss ein kraftschlüssiger Strumpfsitz, im Sinne einer Pressverbindung erwirkt wird und/oder die kraftschlüssige Verbindung verbessert wird. Hierdurch lassen sich Leckageströme von Dämpfungsflüssigkeit, insbesondere Öl, durch die Fügeverbindung, d.h. zwischen dem Präzisrohrrohling und dem Fügeteil hindurch, vermeiden. Während des Fügevorgangs, genauer während des Kaltumformens, bleibt die Temperatur des Fügeteils, insbesondere des metallischen Fügeteils, stets unterhalb dessen Rekristallisationstemperatur, welche üblicherweise bei 40-50 % der Schmelztemperatur liegt. Im Gegensatz zu thermischen Umformverfahren können beim Kaltumformen Festigkeitswerte des Materials nahezu unverändert beibehalten werden. Indem die Materialfestigkeit des Präzisrohrrohlings höher gewählt wird, als die Materialfestigkeit des Fügeteils kann ferner sichergestellt werden, dass die Kaltumformung bzw. der Materialversatz und/oder eine temperaturbedingte Volumenausdehnung des Materials ausschließlich im bzw. am Fügeteil stattfindet.

Eine vorteilhafte Ausführung des Herstellungsverfahrens kennzeichnet sich dadurch, dass ein Rohrendabschnitt oder ein Rohrende des Präzisrohrrohlings vor dem Kaltumformen mit einer Rohraufweitung ausgebildet wird, wobei die Rohraufweitung einen gegenüber dem Präzisrohrrohling größeren Rohrdurchmesser aufweist.

In Weiterbildung dieser Ausführung ist es besonders zweckmäßig, dass das den Präzisrohrrohling koaxial umgebende Fügeteil in einem Arbeitshub in einer Hubrichtung durch einen Matrizen- und/oder Reduzierring gezwungen und während des Arbeitshubs mittels eines, insbesondere als zwei Spannbacken ausgebildeten, Fixiermittels lose und/oder mit Spiel gehalten wird um eine axiale Positionsverlagerung des Präzisrohrrohlings zu ermöglichen, und in einem auf den Arbeitshub folgenden Rückhub in einer der Hubrichtung entgegen gerichteten Rückhubrichtung durch den Matrizen- und/oder Reduzierring geführt wird, wobei der Präzisrohrrohling während des Rückhubs von dem Fixiermittel zurückgehalten wird, indem die Rohraufweitung an einer Rückhaltekante des Fixiermittels zum Anliegen kommt.

Die Rohraufweitung wird vorzugsweise ebenfalls durch ein Kaltumformverfahren, ein sogenanntes Aufweiten umgeformt, wodurch Einbußen in der Materialqualität, insbesondere der Festigkeit des, insbesondere metallischen Präzisrohrrohlings vermieden werden. Beispielsweise kann das Rohrende in einem Bereich von 10-20 %, vorzugsweise 17 % aufgeweitet werden. Während des Rückhubs wird der Präzisrohrrohling bzw. das gefügte Zylinderrohr durch eine im Fixiermittel ausgebildete und der Geometrie der Rohraufweitung angepasste Rückhaltekante zurückgehalten, indem die Rohraufweitung an dieser Rückhaltekante zum Anliegen kommt.

Die Positionierung des an den Präzisrohrrohling anzufügenden Fügeteils ist allein durch die geometrische Ausgestaltung bzw. die Abmessungen des Fixiermittels festlebgar, sodass zur Herstellung unterschiedlicher Zylinderrohre, insbesondere mit an unterschiedlichen axialen Positionen ausgebildeten Dickwandabschnitten und/oder mit oder ohne eine Rohraufweitung vorzugsweise ausschließlich das Fixiermittel zu wechseln ist.

Schließlich kann in vorteilhafter Ausgestaltung auch vorgesehen sein, dass das Fügeteil, welches nach dem Kaltumformen den Dickwandabschnitt ausbildet, welcher gegenüber dem Präzisrohrrohling eine erhöhte Wandstärke aufweist, mit einer Aufnahmenut, insbesondere zur Aufnahme einer Ringdichtung, ausgebildet wird.

Die Fügeverbindung zwischen dem Präzisrohrrohling und dem Fügeteil ist aufgrund der kaltumgeformten, form- oder kraftschlüssigen, insbesondere form- und kraftschlüssigen Verbindung derart fest ausgeführt, dass das den Dickwandabschnitt aufweisende, gefügte Zylinderrohr in derselben Art und Weise wie ein aus einem Vollmaterial gefertigtes Zylinderrohr mit einem beispielweise durch Stauchen erhaltenen Dickwandabschnitt weiter bearbeitet und/oder verwendet werden kann. Insbesondere kann der Dickwandabschnitt mit einer Aufnahmenut zur Aufnahme einer Ringdichtung mittels spanabhebender Materialbearbeitung, vorzugsweise mittels Drehen, versehen werden. Bei einer Verwendung des Zylinderrohrs als Innenrohr für ein Zweirohrstoßdämpfer-/Federbeinsystem lässt sich mittels der Ringdichtung der zwischen dem Innenrohr und dem Außenrohr befindliche Ausgleichsraum dichtend abgrenzen.

Auch das erfindungsgemäße Zylinderrohr zeichnet sich in vorteilhafter Ausgestaltung auch dadurch aus, dass der Dickwandabschnitt, welcher gegenüber dem Präzisrohrrohling eine erhöhte Wandstärke aufweist, mit einer Aufnahmenut, insbesondere zur Aufnahme einer Ringdichtung, ausgebildet ist.

Zweckmäßig ist in einer Ausgestaltung des Zylinderrohrs die den Dickwandabschnitt ausbildende Fügeverbindung zwischen dem Präzisrohrrohling und dem zylindrischen und/oder ringförmigen Fügeteil und/oder der Fügebereich form- und/oder kraftschlüssig ausgebildet ist.

In einer vorteilhaften Ausgestaltung ist die den Dickwandabschnitt ausbildende Fügeverbindung zwischen dem Präzisrohrrohling und dem zylindrisch und/oder ringförmigen Fügeteil optisch nicht erkennbar.

Sowohl optisch als auch zur Weiterverarbeitung oder bezüglich vorgesehener Verwendungszwecke ist das erfindungsgemäße, insbesondere nach dem erfindungsgemäßen Verfahren hergestellte Zylinderrohr nicht von einem herkömmlichen Zylinderrohr, dessen Dickwandabschnitt beispielsweise durch Stauchungsverfahren umgeformt wurde, zu unterscheiden. Das erfindungsgemäße Herstellungsverfahren ist gegenüber aus dem Stand der Technik bekannten Verfahren schneller, einfacher und kostengünstiger durchzuführen, da nur wenige Bearbeitungsschritte des Präzisrohrrohlings und/oder des Fügeteils vorgenommen werden. Sowohl die axiale Position bezüglich des Präzisrohrrohlings als auch die axiale Länge des Fügeteils können in einfacher Weise durch die Ausgestaltung eines Fixiermittels, an welchem das Fügeteil während des Kaltumformens anliegt, bzw. über die axiale Länge des verwendeten Fügeteils festgelegt werden. Auch die radiale Erstreckung bzw. die Dicke des Dickwandabschnitts kann über die geometrische Abmessung des Fügeteils eingestellt werden. Das erfindungsgemäße Zylinderrohr ist insgesamt kostengünstiger als aus dem Stand der Technik bekannte Zylinderrohre mit Dickwandabschnitt, da dieser nicht aus dem Präzisrohrrohling selbst umgeformt sondern als kostengünstigeres Fügeteil angefügt wird. Zusätzliche Materialverluste, beispielsweise durch Ausbilden einer Stauchungskante, können ebenfalls vermieden werden. Durch das erfindungsgemäße Kaltumformen zur Ausbildung der Fügeverbindung bleibt der Festigkeitswert des Präzisrohrrohlings unverändert.

Im Rahmen der Erfindung sei ausdrücklich darauf hingewiesen, dass das erfindungsgemäße Herstellungsverfahren nach Anspruch 1 sowie das erfindungsgemäße Zylinderrohr, d. h. das zylindrisch ausgebildete Hohlrohr, nach Anspruch 12 auch für andere Zwecke, als die Herstellung eines bzw. Verwendung als Stoßdämpferrohr, insbesondere Stoßdämpferinnenrohr geeignet sein kann. Insbesondere lässt sich das erfindungsgemäße Herstellungsverfahren für jegliche Präzisrohrprodukte anwenden, welche eine lokale Verdickung bzw. Erhöhung der Wandstärke bzw. Dickwandabschnitt vorsehen. Die erfindungsgemäße, umformtechnisch hergestellte Fügeverbindung ist jeweils dazu geeignet die an Präzisrohrprodukte gestellten Anforderungen bezüglich der Kraft-/Formschlüssigkeit zu erfüllen.

Weitere Einzelheiten, Merkmale, Merkmals(unter) kombinationen, Vorteile und Wirkungen auf der Basis der Erfindung ergeben sich aus der nachfolgenden Beschreibung der bevorzugten Ausführungsbeispiele der Erfindung und den Zeichnungen. Zur Übersichtlichkeit sind die Figuren jeweils entlang der Symmetrielinie unterbrochen. Es zeigen, jeweils in einer schematischen Schnittdarstellung
Figur 1 eine beispielhafte Darstellung des erfindungsgemäßen Verfahrens, in welcher ein Präzisrohrrohling in einem Fixiermittel angeordnet ist,
Figur 2 eine beispielhafte Darstellung des erfindungsgemäßen Verfahrens, in welcher sich ein den Präzisrohrrohling koaxial umgebendes Fügeteil auf dem Fixiermittel abstützt,
Figur 3 eine beispielhafte Darstellung des erfindungsgemäßen Verfahrens, welcher ein Werkzeugkopf zum Fügen des Präzisrohrrohlings mit dem Fügeteil zu entnehmen ist,
Figur 4 eine beispielhafte Darstellung des erfindungsgemäßen Verfahrens, in welcher der Werkzeugkopf während eines Arbeitshubs in einer Hubrichtung verfahren wird,
Figur 5 eine beispielhafte Darstellung des erfindungsgemäßen Verfahrens, in welcher das Fügeteil nach Abschluss des Arbeitshubs an den Präzisrohrrohling angefügt ist bzw. form- und/oder kraftschlüssig mit dem Präzisrohrrohling verbunden ist,
Figur 6 eine beispielhafte Darstellung des erfindungsgemäßen Verfahrens, in welcher der Werkzeugkopf während eines Rückhubs in eine Rückhubrichtung verfahren wird,
Figur 7 eine beispielhafte Darstellung eines Ausschnitts des Fügebereichs eines erfindungsgemäßen Zylinderrohres und
Figur 8 eine beispielhafte Darstellung eines erfindungsgemäßen Zylinderrohres.

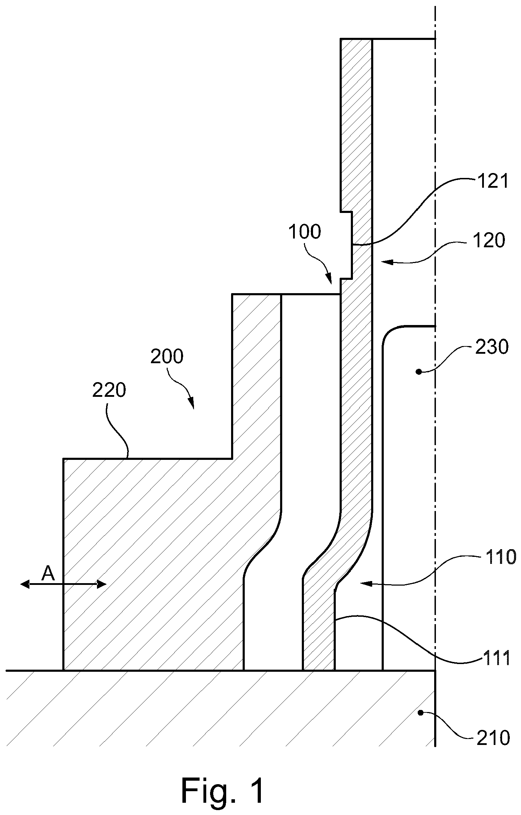

Die Figur 1 zeigt eine beispielhafte Darstellung des erfindungsgemäßen Verfahrens, in welcher ein Präzisrohrrohling 100 in einem Fixiermittel 200 angeordnet ist. Ein erstes Rohrende 110 des Präzisrohrrohlings 100 ist mit einer Rohraufweitung 111, welche vorzugsweise durch Aufweiten kaltumgeformt wurde, ausgebildet. In einem Fügebereich 120 weist der Präzisrohrrohling 100 eine Ringnut oder umlaufende Aufnahme 121 auf, welche insbesondere durch spanabhebende Materialbearbeitung, vorzugsweise durch Drehen, an der Mantelaußenseite des Präzisrohrrohlings 100 ausgebildet wurde. Das Fixiermittel 200 ist auf einer Grundplatte 210 angeordnet und weist zwei radial zueinander beweglich gelagerte, hohlzylindrische Spannbacken 220 auf. Die Innenfläche der hohlzylindrischen Spannbacken 220 ist in ihrer Geometrie der Rohraufweitung 111 des Präzisrohrrohlings 100 angepasst. Ferner weist das Fixiermittel 200 einen Gegendorn 230 auf, welcher koaxial von den Spannbacken 220 umgeben ist. Das mit der Rohraufweitung 111 ausgebildete erste Rohrende 110 des Präzisrohrrohlings 100 ist, wiederum koaxial, zwischen den Spannbacken 220 und dem Gegendorn 230 angeordnet. Um den Präzisrohrrohling 100 zu halten bzw. zu fixieren und/oder einzuspannen sind die Spannbacken 220 radial entlang des Doppelpfeils A beweglich.

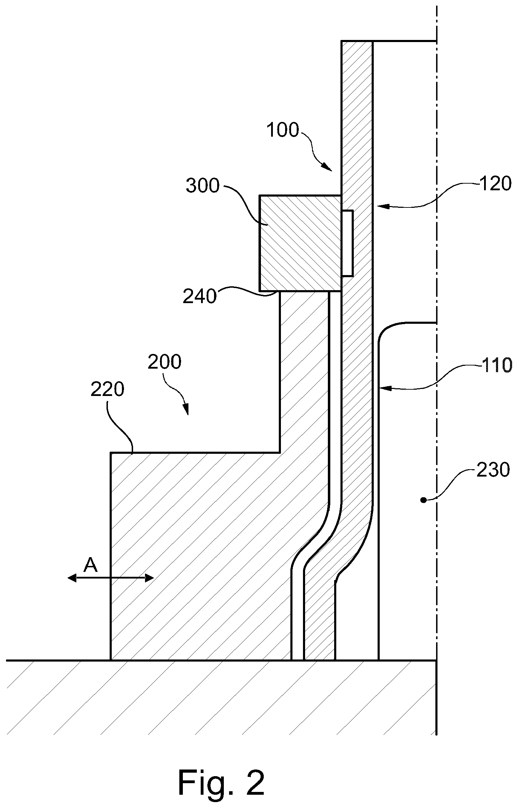

In Figur 2 ist eine beispielhafte Darstellung des erfindungsgemäßen Verfahrens gezeigt, in welcher sich ein den Präzisrohrrohling 100 koaxial umgebendes, zylindrisches und/oder ringförmiges Fügeteil 300 auf dem Fixiermittel 200 abstützt. In der Darstellung sind die Spannbacken 220 des Fixiermittels 200 radial entlang des Doppelpfeils A in Richtung des Präzisrohrrohlings 100 zueinander verfahren, um den Präzisrohrrohling 100 im Bereich des ersten Rohrendes 110 zu halten. Wie dargestellt wird der Präzisrohrrohling 100 durch das Fixiermittel 200 lose gehalten bzw. ist das erste Rohrende 110 des Präzisrohrrohlings 100 mit Spiel, sowohl in radialer wie auch in axialer Richtung, koaxial zwischen den Spannbacken 220 und dem Gegendorn 230 angeordnet. Das zylindrische und/oder ringförmige Fügeteil 300 ist den Präzisrohrrohling 100 koaxial umgebend innerhalb des Fügebereichs 120 angeordnet, wobei sich das Fügeteil 300 auf einer Stützkante 240 der Spannbacken 220 abstützt. Das Fügeteil 300 ist lose auf den Präzisrohrrohling 100 aufgeschoben und wird durch das Fixiermittel 200, insbesondere durch die Stützkanten 230 der Spannbacken 220 innerhalb des Fügebereichs 120 gehalten und/oder positioniert, wodurch die axiale Position des später ausgebildeten Dickwandabschnitts bzgl. des Präzisrohrrohlings 100 festgelegt wird.

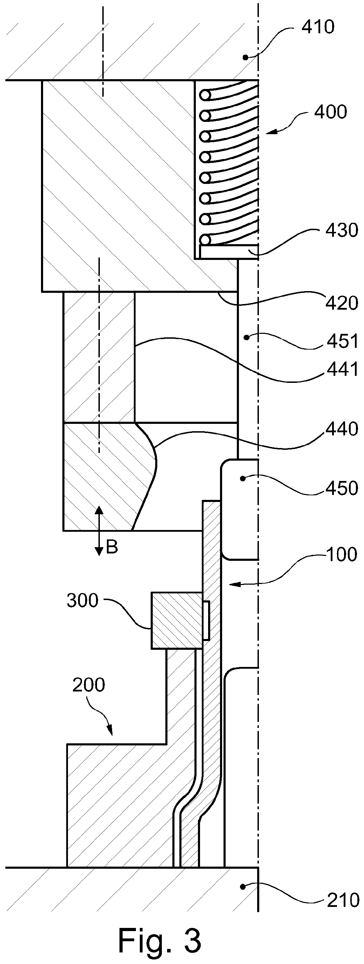

Figur 3 zeigt eine beispielhafte Darstellung des erfindungsgemäßen Verfahrens, welcher ein zum Fügen des Präzisrohrrohlings 100 mit dem Fügeteil 300 vorgesehener Werkzeugkopf 400 zu entnehmen ist. Der Werkzeugkopf 400 ist axial entlang des Doppelpfeils B in Richtung der Bodenplatte 210 verfahrbar, insbesondere absenkbar. Der Werkzeugkopf 400 umfasst eine Kopfplatte 410, einen Aufnahmeblock 420 mit einer zylindrischen Ausnehmung zur Aufnahme eines Federelements 430, insbesondere eines Druckfederelements, einen mit einer Ringkonsole 441 verbundenen Matrizen und/oder Reduzierring 440 sowie einen Stützdorn 450, welcher von einer Dornstange 451 gehalten ist. Der Stützdorn 450 ist bereits teilweise in das Innere des Präzisrohrrohlings 100 eingeschoben und liegt bündig an dessen Innenfläche an bzw. ist der Stützdorn 450 spielfrei innerhalb des Präzisrohrrohlings 100 angeordnet. In der dargestellten Position des Werkzeugkopfs 400 ist das Federelement 430, an welchem sich der Stützdorn 450 mittels der Dornstange 451 abstützt unbelastet und/oder nicht ausgelenkt. Der Matrizen und/oder Reduzierring 440 ist den Stützdorn 450 umgebend angeordnet, sodass ein zweites Rohrende 130 des Präzisrohrrohlings 100, welches aus dem Fixiermittel 200 herausragt, koaxial zwischen dem Stützdorn 450 und dem Matrizen- und/oder Reduzierring 440 angeordnet ist. Aufgrund des radialen Spiels, mit welchem der Präzisrohrrohling 100 innerhalb des Fixiermittels 200 gehalten ist, ist ein spielfreies Einführen des Stützdorns 450 in das zweite Rohrende 130 des Präzisrohrrohlings 100 erleichtert.

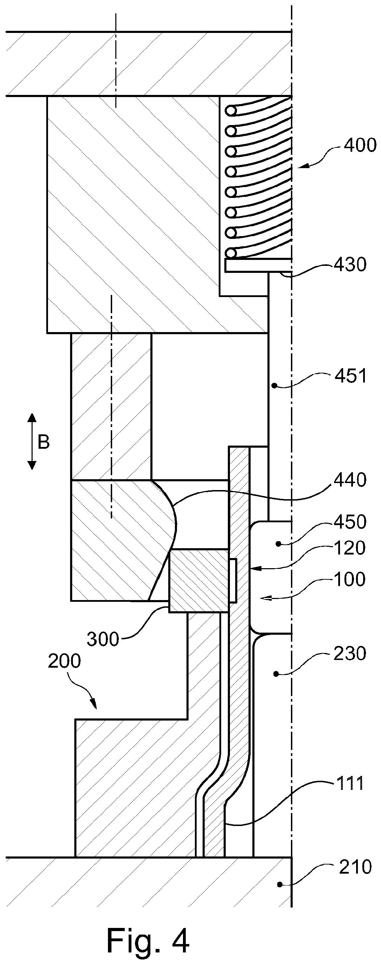

Eine beispielhafte Darstellung des erfindungsgemäßen Verfahrens, in welcher der Werkzeugkopf 400 während eines Arbeitshubs in einer Hubrichtung verfahren wird, ist der Figur 4 zu entnehmen. Der Werkzeugkopf 400 wird in Richtung des von dem Fixiermittel 200 gehaltenen Präzisrohrrohlings 100 bzw. in Richtung der Grundplatte 210 verfahren, insbesondere wird der Werkzeugkopf 400 abgesenkt, bis der Stützdorn 450 an dem koaxial innerhalb des Präzisrohrrohlings 100 angeordneten Gegendorn 230 anschlägt. Die Höhe des Gegendorns 230 bzw. dessen axiale Länge ist derart gewählt, dass der Stützdorn 450 den Präzisrohrrohling 100 innerhalb des Fügebereichs 120 radial stützt. Die Positionierung des an den Präzisrohrrohling 100 anzufügenden Fügeteils 300 ist somit allein durch die geometrische Ausgestaltung bzw. die Abmessungen des Fixiermittels 200 festlebgar, sodass zur Herstellung unterschiedlicher Zylinderrohre, insbesondere mit an unterschiedlichen Positionen ausgebildeten Dickwandabschnitten und/oder mit oder eine ohne Rohraufweitung 111 vorzugsweise ausschließlich durch Wechsel des Fixiermittels 200 und Verwendung des jeweils selben Werkzeugkopfs 400 möglich ist.

Auch nachdem der Anschlag zwischen dem Stützdorn 450 und dem Gegendorn 230 ausgebildet ist, wird der Werkzeugkopf 400 während des Arbeitshubs weiter in Richtung der Bodenplatte 210 verfahren, insbesondere abgesenkt, wobei das Federelement 430, insbesondere das Druckfederelement, mittels der Dornstange 451 belastet und/oder ausgelenkt wird. Hierdurch wird der Matrizen- und/oder Reduzierring 440 weiter in Richtung der Grundplatte 210 verfahren, insbesondere abgesenkt, wohingegen der Stützdorn 450 von dem Gegendorn 230 in unveränderter Position zurückgehalten wird. Der Matrizen- und/oder Reduzierring 440 bewegt sich somit axial relativ zu dem Stützdorn 450.

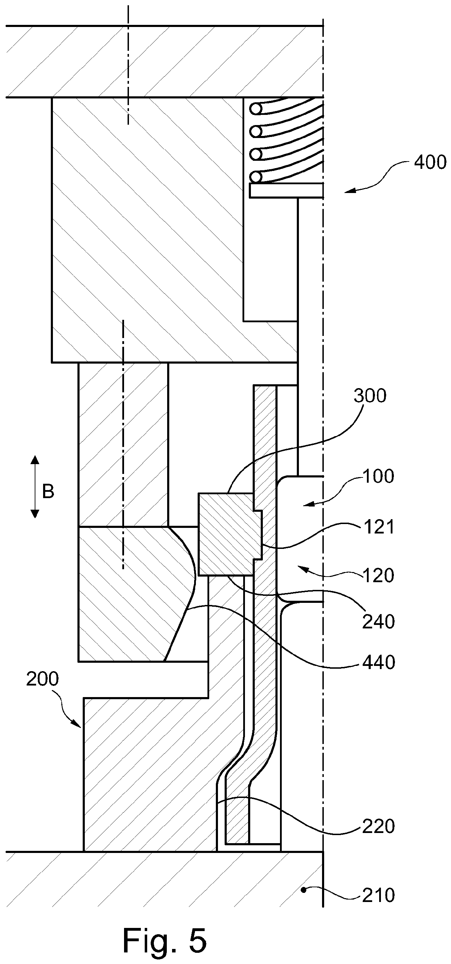

Gemäß der Figur 5 wird der Werkzeugkopf 400 weiter in Richtung der Grundplatte 210 verfahren, insbesondere abgesenkt, bis der Matrizen- und/oder Reduzierring 440 nach Abschluss des Arbeitshubs das koaxial zu dem Präzisrohrrohling 100 angeordnete Fügeteil 300 passiert hat bzw. das Fügeteil 300 durch den Matrizen- und/oder Reduzierring 440 gezwungen wurde. Hierbei wird das Fügeteil 300 einer radialen, wie auch axialen Druck- und/oder Presskraft ausgesetzt wodurch eine Kaltumformung, insbesondere ein radialer und axialer Materialversatz des Fügeteils 300 erwirkt wird. Der Präzisrohrrohling 100 weist innerhalb des Fügebereichs 120 die zuvor ausgebildete, insbesondere eingedrehte, Ringnut oder umlaufende Aufnahme 121 auf, wodurch ein radialer Materialversatz des Fügeteils 300 in diese hinein erwirkt wird, um einen Formschluss bzw. eine formschlüssige Fügeverbindung durch Kaltumformung zwischen dem Fügeteil 300 und dem Präzisrohrrohling 100 auszubilden. Mittels des durch die Kaltumformung erwirkten axialen Materialversatzes lässt sich ein Kraftschluss bzw. eine kraftschlüssige Verbindung zwischen dem Präzisrohrrohling 100 und dem Fügeteil 300 ausbilden. Insbesondere wird das Fügeteil 300 mittels des Matrizen- und/oder Reduzierrings 440 abgestreckt, wobei dessen axiale Länge erhöht und gleichzeitig dessen Durchmesser verringert wird. Nach der Kaltumformung, insbesondere des Abstreckens, ist das Fügeteil 300 im Sinne eines Presssitzes kraftschlüssig mit dem Präzisrohrrohling 100 verbunden. Während des Kaltumformens, insbesondere Abstreckens, erfährt das Fügeteil 300 zudem eine Temperaturerhöhung, unterhalb dessen Rekristallisationstemperatur, welche mit einer Volumenausdehnung einhergeht und aufgrund der anschließenden Abkühlung und der damit einhergehenden Volumenabnahme zu einer Verbesserung des Kraftschlusses bzw. der kraftschlüssigen Verbindung und/oder des Presssitzes zwischen dem Fügeteil 300 und dem Präzisrohrrohling 100 beiträgt. Aufgrund der Erhöhung der axialen Länge des Fügeteils 300, welches sich auf der Stützkante 240 des Fixiermittels 200, insbesondere der Spannbacken 220, abstützt wird der Präzisrohrrohling 100, an welchen das Fügeteil 300 angefügt ist, innerhalb des Fixiermittels 200 angehoben, was durch die lose bzw. mit radialem und axialem Spiel ausgebildete Lagerung bzw. Fixierung ermöglicht ist. Auf diese Weise lässt sich eine durch das Kaltumformen, insbesondere Abstrecken, bedingte Beschädigung und/oder Verminderung der Qualität des Präzisrohrrohlings vermeiden.

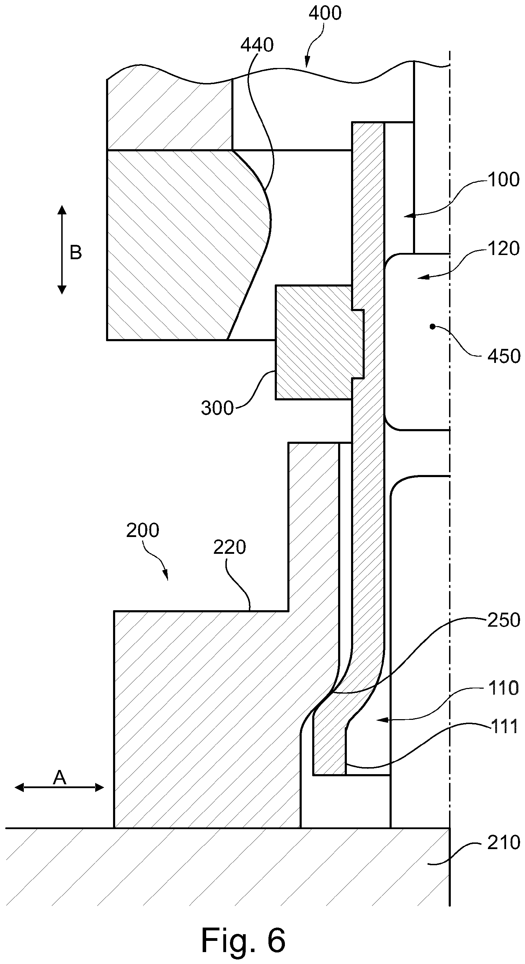

Gemäß der Figur 6 ist eine beispielhafte Darstellung des erfindungsgemäßen Verfahrens, in welcher der Werkzeugkopf 400 während eines Rückhubs in eine Rückhubrichtung verfahren wird, dargestellt. Während des Rückhubs wird der Fügebereich 120 bzw. das an den Präzisrohrrohling 100 angefügte Fügeteil 300 erneut, in entgegengesetzter Rückhubrichtung, im Wesentlichen kraftfrei durch den Matrizen- und/oder Reduzierring 440 geführt. Zusammen mit dem Werkzeugkopf 400 und dem Matrizen- und/oder Reduzierring 440 wird auch der Stützdorn verfahren, insbesondere 450 angehoben, um diesen aus dem Inneren des Präzisrohrrohlings 100 zu entfernen. Aufgrund der passgenauen und/oder spielfreien Positionierung des Stützdorns 450 innerhalb des Präzisrohrrohlings 100, wird dieser während des Rückhubs von dem sich Stützdorn 450 mitgenommen, insbesondere angehoben. Um eine Entfernung des Stützdorns 450 aus dem Präzisrohrrohling 100 zu ermöglichen, ist die Geometrie des Fixiermittels 200, insbesondere der Stützbacken 220, derart an die Geometrie des Präzisrohrrohlings 100 angepasst, dass sich die am ersten Rohrende 110 ausgebildete Rohraufweitung 111 an einer innerhalb des hohlzylindrischen Fixiermittels 200 angeordneten Rückhaltekante 250 abstützt bzw. an dieser zum Anschlag gelangt und von der Rückhaltekante 250 zurückgehalten wird. Alternativ oder zusätzlich können, insbesondere in einer Ausführungsvariante des Herstellungsverfahrens, in welcher der Präzisrohrrohling 100 keine Rohraufweitung 111 aufweist, während des Rückhubs das Fixiermittel 200, insbesondere dessen Spannbacken 220, radial entlang des Doppelpfeils A auf der Grundplatte 210 in Richtung des Präzisrohrrohlings 100 verfahren werden, um diesen zu fixieren bzw. fest und/oder spielfrei zu halten.

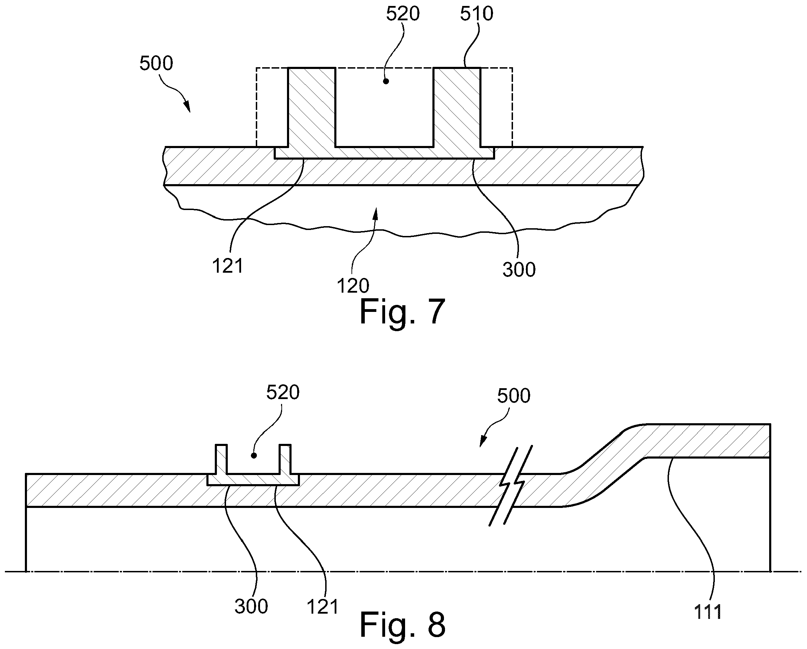

Eine beispielhafte Darstellung eines Ausschnitts des Fügebereichs 120 eines erfindungsgemäßen Zylinderrohrs 500 kann der Figur 7 entnommen werden. Zur Ausbildung eines Dickwandabschnitts 510 des Zylinderrohrs 500 innerhalb des Fügebereichs 120 ist ein Fügeteil 300 formschlüssig innerhalb einer Ringnut oder umlaufenden Aufnahme 121 des Zylinderrohrs 500 angeordnet und umschließt das Zylinderrohr 500, insbesondere den Fügebereich 120 kraftschlüssig. Die Fügeverbindung ist aufgrund der kaltumgeformten, form- oder kraftschlüssigen, insbesondere form- und kraftschlüssigen Verbindung derart fest ausgeführt, dass das den Dickwandabschnitt 510 aufweisende, gefügte Zylinderrohr 500 in derselben Art und Weise wie ein aus einem Vollmaterial gefertigtes, insbesondere einen gestauchten Dickwandabschnitt aufweisendes Zylinderrohr verarbeitbar und/oder weiter bearbeitbar ist. Der Dickwandabschnitt 510 ist mittels spanender Materialbearbeitung, insbesondere mittels Drehen, mit einer Aufnahmenut 520, vorzugsweise zur Aufnahme eines Dichtungsrings, ausgebildet. Die ursprüngliche geometrische Form des Dickwandabschnitts 510, bevor die Aufnahmenut 520 ausgebildet wurde, ist anhand der gestrichelten Linie schematisch angedeutet.

Schließlich ist in der Figur 8 eine beispielhafte Darstellung eines erfindungsgemäßen Zylinderrohres 500 dargestellt. Das Zylinderrohr 500 umfasst einen Dickwandabschnitt 510 mit einer Aufnahmenut 520 sowie eine Rohraufweitung 111.Der Dickwandabschnitt 510 ist als Fügeteil 300 aus einem abweichenden, insbesondere metallischen, Material als die übrigen Abschnitte des Zylinderrohrs 500 form- und kraftschlüssig an dieses angefügt. Ferner ist der Dickwandabschnitt 510 innerhalb einer Ringnut oder umlaufenden Aufnahme 121 des Zylinderrohrs 500 passgenau angeordnet. Sowohl optisch als auch zur Weiterverarbeitung oder bezüglich vorgesehener Verwendungszwecke ist das erfindungsgemäße, insbesondere nach dem erfindungsgemäßen Verfahren hergestellte Zylinderrohr 500 nicht von einem herkömmlichen Zylinderrohr, dessen Dickwandabschnitt beispielsweise durch Stauchungsverfahren umgeformt wurde, zu unterscheiden.
- 100: Präzisrohrrohling
- 110: erstes Rohrende
- 111: Rohraufweitung
- 120: Fügebereich
- 121: Ringnut oder umlaufende Aufnahme
- 130: Zweites Rohrende
- 200: Fixiermittel
- 210: Grundplatte
- 220: Spannbacken
- 230: Gegendorn
- 240: Stützkante
- 250: Rückhaltekante
- 300: Fügeteil
- 400: Werkzeug kopf
- 410: Kopfplatte
- 420: Aufnahmeblock
- 430: Federelement
- 440: Matrizen- und/oder Reduzierring
- 441: Ringkonsole
- 450: Stützdorn
- 451: Dornstange
- 500: Zylinderrohr
- 510: Dickwandabschnitt
- 520: Aufnahmenut
- A, B: Doppelpfeil

## Patentansprüche

1. Verfahren zur Herstellung eines Zylinderrohrs (500), welches beispielsweise als Stoßdämpferrohr, insbesondere als Stoßdämpferinnenrohr für ein Zweirohrstoßdämpfer-/Federbeinsystem für Kraftfahrzeuge geeignet ist, wobei ein als Hohlrohr ausgebildeter Präzisrohrrohling (100) mit einem den Präzisrohrrohling (100) zumindest in einem Fügebereich (120) koaxial umgebenden zylindrischen und/oder ringförmigen Fügeteil (300) zur Ausbildung eines eine gegenüber dem Präzisrohrrohling (100) erhöhte Wandstärke aufweisenden Dickwandabschnitts (510) gefügt wird,
**dadurch gekennzeichnet, dass**
eine Fügeverbindung zwischen dem Präzisrohrrohling (100) und dem Fügeteil (300) zur Ausbildung des Dickwandabschnitts (510) durch lokales Kaltumformen des Fügeteils (300) innerhalb des Fügebereichs (120) form- und/oder kraftschlüssig ausgebildet wird.

2. Herstellungsverfahren nach Anspruch 1, **dadurch gekennzeichnet, dass** das Fügeteil (300) während des Kaltumformens in einem Arbeitshub in einer Hubrichtung durch einen Matrizen- und/oder Reduzierring (440) gezwungen wird, wobei lokal innerhalb des Fügebereichs (120) ein axialer und/oder ein radialer Materialversatz des Fügeteils (300) zur Ausbildung der form- und/oder kraftschlüssigen Fügeverbindung erwirkt wird.

3. Herstellungsverfahren nach Anspruch 2, **dadurch gekennzeichnet, dass** der Präzisrohrrohling (100) während des Kaltumformens mittels eines, insbesondere als Spannbacken (220) ausgebildeten, Fixiermittels (200) gehalten wird, wobei der Präzisrohrrohling (100) in dem Arbeitshub lose und/oder mit Spiel mittels des Fixiermittels (200) gehalten wird, um eine axiale Positionsverlagerung des Präzisrohrrohlings (100) zu ermöglichen.

4. Herstellungsverfahren nach einem der Ansprüche 2 oder 3, **dadurch gekennzeichnet, dass** der Präzisrohrrohling (100) nach dem Kaltumformen in einem auf den Arbeitshub folgenden Rückhub in einer der Hubrichtung entgegen gerichteten Rückhubrichtung durch den Matrizen- und/oder Reduzierring (440) geführt wird und mittels eines, insbesondere als zwei Spannbacken (220) ausgebildeten, Fixiermittels (200) fest und/oder spielfrei gehalten wird, um eine axiale Positionsverlagerung des Präzisrohrrohlings (100) einzuschränken und/oder zu verhindern.

5. Herstellungsverfahren nach einem der vorhergehenden Ansprüche, **dadurch gekennzeichnet, dass** der Präzisrohrrohling (100) innerhalb des Fügebereichs (120) mit einer Ringnut oder umlaufenden Aufnahme (121) ausgebildet wird und anschließend während des Kaltumformens ein radialer Materialversatz des Fügeteils (300) in die Ringnut oder umlaufende Aufnahme (121) zur Ausbildung der formschlüssigen Fügeverbindung erwirkt wird.

6. Herstellungsverfahren nach Anspruch 5, **dadurch gekennzeichnet, dass** eine axiale Länge des zylindrischen und/oder ringförmigen Fügeteils (300) größer gewählt wird, als eine axiale Länge der innerhalb des Fügebereichs (120) am Präzisrohrrohling (100) ausgebildeten Ringnut oder umlaufenden Aufnahme (121) und während des Kaltumformens ein radialer Materialversatz des Fügeteils (300) in die Ringnut oder umlaufende Aufnahme (121) zur Ausbildung der formschlüssigen Fügeverbindung erwirkt wird.

7. Herstellungsverfahren nach einem der vorhergehenden Ansprüche, **dadurch gekennzeichnet, dass** das Fügeteil (300) vor und/oder während des Kaltumformens zur Ausbildung und/oder Verbesserung der kraftschlüssigen Fügeverbindung auf eine Temperatur unterhalb der Rekristallisationstemperatur des Fügeteils (300) erwärmt wird.

8. Herstellungsverfahren nach einem der vorhergehenden Ansprüche, **dadurch gekennzeichnet, dass** eine Materialfestigkeit des Präzisrohrrohlings (100) höher gewählt wird, als eine Materialfestigkeit des Fügeteils (300).

9. Herstellungsverfahren nach einem der vorhergehenden Ansprüche, **dadurch gekennzeichnet, dass** ein Rohrendabschnitt oder ein Rohrende (110, 130) des Präzisrohrrohlings (100) vor dem Kaltumformen mit einer Rohraufweitung (111) ausgebildet wird, wobei die Rohraufweitung (111) einen gegenüber dem Präzisrohrrohling (100) größeren Rohrdurchmesser aufweist.

10. Herstellungsverfahren nach Anspruch 9, **dadurch gekennzeichnet, dass** das den Präzisrohrrohling (100) koaxial umgebende Fügeteil (300) in einem Arbeitshub in einer Hubrichtung durch einen Matrizen- und/oder Reduzierring (440) gezwungen und mittels eines, insbesondere als zwei Spannbacken (220) ausgebildeten, Fixiermittels (200) lose und/oder mit Spiel gehalten wird um eine axiale Positionsverlagerung des Präzisrohrrohlings (100) zu ermöglichen, und in einem auf den Arbeitshub folgenden Rückhub in einer der Hubrichtung entgegen gerichteten Rückhubrichtung durch den Matrizen- und/oder Reduzierring (440) geführt wird, wobei der Präzisrohrrohling (100) von dem Fixiermittel (200) zurückgehalten wird, indem die Rohraufweitung (111) an einer Rückhaltekante (250) des Fixiermittels (200) zum Anliegen kommt.

11. Herstellungsverfahren nach einem der vorhergehenden Ansprüche, **dadurch gekennzeichnet, dass** das Fügeteil (300), welches nach dem Kaltumformen den gegenüber dem Präzisrohrrohling (100) eine erhöhte Wandstärke aufweisenden Dickwandabschnitt (510) ausbildet, mit einer Aufnahmenut (520), insbesondere zur Aufnahme einer Ringdichtung, ausgebildet wird.

12. Zylinderrohr (500), insbesondere nach dem Verfahren nach einem der Ansprüche 1 - 11 hergestellt, welches beispielsweise als Stoßdämpferrohr, insbesondere als Stoßdämpferinnenrohr für ein Zweirohrstoßdämpfer-/Federbeinsystem für Kraftfahrzeuge, geeignet ist, mit einem eine erhöhte Wandstärke aufweisenden Dickwandabschnitt (510),
**dadurch gekennzeichnet, dass**
der Dickwandabschnitt (510) als Fügeverbindung zwischen einem Präzisrohrrohling (100) und einem zylindrisch und/oder ringförmigen Fügeteil (300) ausgebildet ist, wobei das Fügeteil (300) den Präzisrohrrohling (100) in einem Fügebereich (120) und im Bereich des Dickwandabschnitts (510) koaxial umgibt.

13. Zylinderrohr (500) nach Anspruch 12, **dadurch gekennzeichnet, dass** der Dickwandabschnitt (510), welcher gegenüber dem Präzisrohrrohling (100) eine erhöhte Wandstärke aufweist, mit einer Aufnahmenut (520), insbesondere zur Aufnahme einer Ringdichtung, ausgebildet ist.

14. Zylinderrohr (500) nach einem der Ansprüche 12 oder 13, **dadurch gekennzeichnet, dass** die den Dickwandabschnitt (510) ausbildende Fügeverbindung zwischen dem Präzisrohrrohling (100) und dem zylindrischen und/oder ringförmigen Fügeteil (300) und/oder der Fügebereich (120) form- und/oder kraftschlüssig ausgebildet ist.

15. Zylinderrohr (500) nach einem der Ansprüche 12 bis 13, **dadurch gekennzeichnet, dass** die den Dickwandabschnitt (510) ausbildende Fügeverbindung zwischen dem Präzisrohrrohling (100) und dem zylindrisch und/oder ringförmigen Fügeteil (300) optisch nicht erkennbar.
